Europäisches Patentamt

European Patent Office

Office européen des brevets

(11) Numéro de publication: **0 287 489**
**A1**

## DEMANDE DE BREVET EUROPEEN

(21) Numéro de dépôt: **88440030.0**

(22) Date de dépôt: **12.04.88**

(51) Int. Cl.⁴: **A 01 B 19/06**

(30) Priorité: **13.04.87 FR 8705336**

(43) Date de publication de la demande:
**19.10.88 Bulletin 88/42**

(84) Etats contractants désignés:
**AT BE CH DE ES FR GB IT Li NL**

(71) Demandeur: **KUHN S.A.**
**4, Impasse des Fabriques**
**F-67700 Saverne (FR)**

(72) Inventeur: **Oberle, Edmond**
**11, rue de Thal Haegen**
**F-67700 Saverne (FR)**

**Wattron, Bernard**
**17, rue des Jardins Haegen**
**F-67700 Saverne (FR)**

(54) **Machine agricole de travail du sol à outils animés d'un mouvement alternatif.**

(57) Selon l'invention, chaque bielle (30, 31 ; 32, 33) est liée par une articulation (35) d'axe dirigé sensiblement parallèlement à la direction d'avance (8) à un bras oscillant (10 ; 12) de sa barre correspondante (2, 3 ; 4, 5).

L'invention trouve son application dans le domaine du machinisme agricole.

FIG.1

Bundesdruckerei Berlin

## Description

La présente invention concerne une machine agricole de travail du sol comportant un châssis muni d'un dispositif d'attelage à un véhicule tracteur, châssis auquel est liée, par une pluralité de bras oscillants, au moins une rangée de deux barres munies d'outils et à mouvement en opposition de phase, ledit mouvement étant généré par un mécanisme de transformation du mouvement rotatif reçu d'une source motrice en un mouvement de va-et-vient transversal à la direction d'avance, comportant un dispositif à bielles-excentriques supporté par le châssis et dont les bielles servent à transmettre le mouvement de va-et-vient aux barres correspondantes, lesdits bras oscillants étant articulés d'une part au châssis par une articulation d'axe dirigé sensiblement parallèlement à la direction d'avance et d'autre part, à leur barre correspondante par une articulation d'axe également dirigé sensiblement parallèlement à la direction d'avance.

On connaît une telle machine de travail du sol dont les bielles servant à transmettre le mouvement de va-et-vient à leur barre correspondante, sont relativement courtes et sont liées à leur barre correspondante par une chape fixée à l'extrémité de ladite barre s'étendant près du dispositif à bielles-excentriques. Ces chapes s'étendent à partir de leur barre correspondante vers le haut. Chaque bielle est liée d'une part par son pied à sa chape correspondante au moyen d'une articulation d'axe dirigé sensiblement parallèlement à la direction d'avance et d'autre part par sa tête à son excentrique correspondant.

Afin que le dispositif à bielles-excentriques ne puisse pas être encrassé, il doit se situer relativement haut, loin de la terre travaillée.

De ce fait, le point de liaison d'une bielle à sa chape correspondante est également situé relativement haut, de sorte que la hauteur de la chape est relativement importante.

Compte tenu des efforts importants que doit transmettre chaque bielle à sa chape correspondante pour entraîner sa barre correspondante, il est apparu, au bout d'un certain temps de travail, des ruptures de la barre à l'endroit où s'arrete la liaison de la chape à la barre. Ces problèmes de rupture auraient nécessité un tel renforcement des barres que leur poids aurait été augmenté de manière inacceptable.

Le but de la présente invention est de remédier à ce problème de rupture, sans toutefois augmenter le poids des barres de façon inacceptable.

Dans ce but, la machine agricole de travail du sol selon l'invention est caractérisée par le fait que chaque bielle est liée par une articulation d'axe dirigé sensiblement parallèlement à la direction d'avance, à un bras oscillant de sa barre correspondante.

Grâce à cet agencement, la transmission de l'effort d'entraînement dans une barre ne génère plus d'efforts de flexion importants dans ladite barre, comme c'est le cas dans la machine connue. Les problèmes de rupture des barres sont ainsi résolus sans que le poids desdites barres n'ait été changé de manière significative.

Préférentiellement, chaque bielle est liée au bras oscillant de sa barre correspondante s'étendant le plus près du dispositif à bielles-excentriques. Le poids des bielles est ainsi avantageusement réduit.

Selon une caractéristique supplémentaire de l'invention, le bras oscillant entraîné par une bielle est prolongé vers le haut au-delà de son articulation au châssis, ladite bielle étant articulée à la partie dudit bras oscillant prolongée vers le haut au-delà de ladite articulation.

Cet agencement permet d'éloigner au maximum le dispositif à bielles-excentriques de la terre travaillée sans toutefois augmenter la hauteur du châssis et tout en conservant un certain équilibrage des différentes masses en mouvement.

Cet équilibrage des masses en mouvement est réalisé de manière optimale lorsque les bielles qui présentent un plan de symétrie contenant l'axe de leur pied et de leur tête et qui sont liées à deux barres adjacentes d'une même rangée ayant des mouvements en opposition de phase, sont agencées de telle manière que, lorsque lesdites bielles sont au point mort de leur mouvement alternatif transversal, leurs plans de symétrie sont confondus, sont horizontaux et contiennent l'axe de rotation de l'arbre du dispositif à bielles-excentriques.

Selon une autre caractéristique supplémentaire de l'invention, la machine agricole comporte deux rangées de barres disposées l'une derrière l'autre, compte tenu du sens d'avance, les bras oscillants entraînés de deux barres s'étendant directement l'une derrière l'autre, sont, compte tenu dudit sens d'avance, disposés l'un derrière l'autre.

Avantageusement, ces bras oscillants entraînés, disposés l'un derrière l'autre, sont montés sur un arbre commun, fixé sur le châssis et qui constitue leur articulation au châssis.

Préférentiellement, entre ces deux bras oscillants entraînés, est agencé un palier intermédiaire, solidaire du châssis, qui soutient la partie médiane dudit arbre commun. Cet arbre peut ainsi bien résister aux sollicitations auxquelles il est soumis pendant le travail.

Les articulations des bras oscillants entraînés comportent dans l'invention, des paliers à roulements, ce qui leur confère une grande durée de vie.

Dans le même but, l'articulation de chaque bielle à son bras oscillant entraîné correspondant comporte également un palier à roulements.

D'autres avantages et caractéristiques de l'invention sont contenus dans la description ci-dessous de deux exemples non limitatifs de réalisation de l'invention, se référant au dessin annexé sur lequel :

    - La figure 1 représente une vue de derrière d'une machine de travail du sol selon l'invention,

    - La figure 2 représente à une échelle agrandie, une vue de dessus de la partie médiane de la machine selon l'invention où est agencé le dispositif à bielles-excentriques (le dispositif d'attelage a été enlevé pour une plus grande clarté),

- La figure 3 représente à une échelle agrandie, une vue de devant de la partie médiane de la machine représentée sur la figure 2 (pour une question de clarté, seule la rangée avant de barres a été représentée),

- La figure 4 représente une coupe suivant IV-IV défini sur la figure 3,

- La figure 5 représente une vue de derrière de la partie médiane de la machine représentée sur la figure 2 (pour une question de clarté, seule la rangée arrière de barres a été représentée),

- La figure 6 représente une vue analogue à celle de la figure 3 d'un deuxième exemple de réalisation,

- La figure 7 représente une coupe suivant VII-VII défini sur la figure 6.

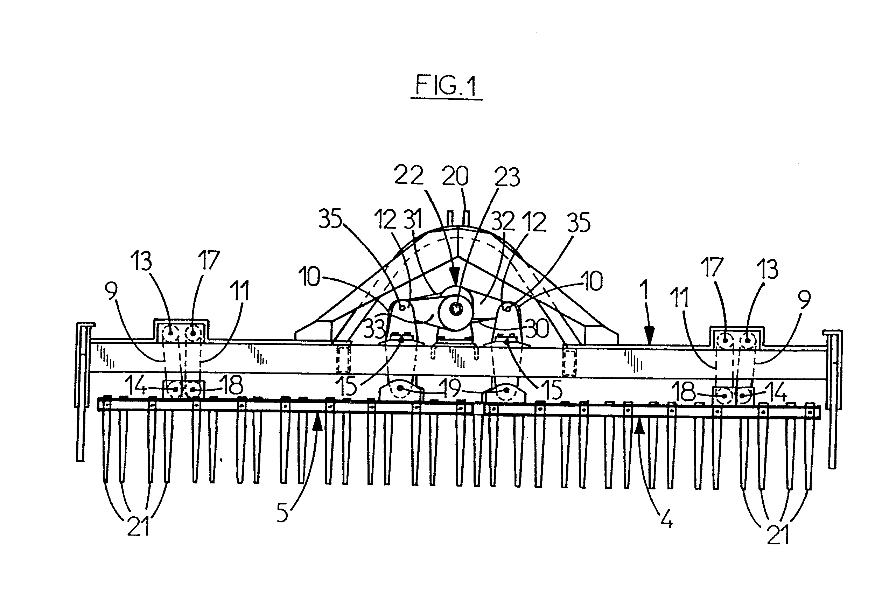

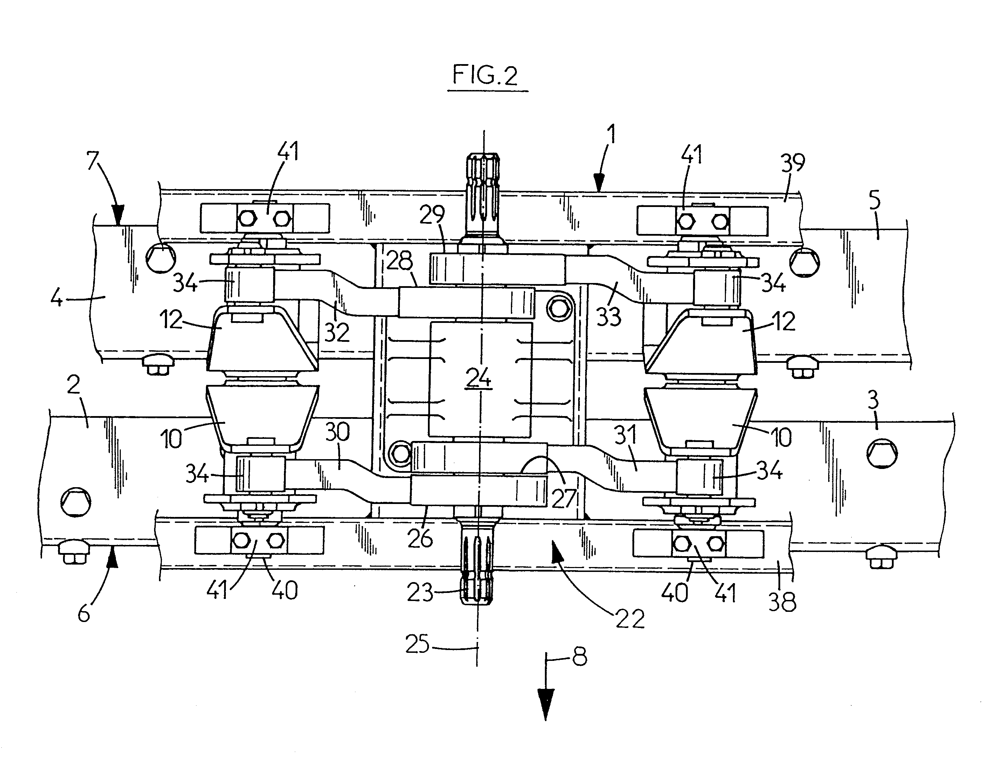

Sur la figure 1, on voit une machine de travail du sol selon la présente invention. Ladite machine est constituée d'un châssis (1) auquel sont liées des barres à outils (2, 3, 4, 5) (voir figure 2). Les barres (2, 3, 4, 5) sont, comme visible sur la figure 2, réparties suivant deux rangées (6 ; 7) disposées l'une derrière l'autre, compte tenu du sens d'avance au travail (8) (voir figures 2, 4 et 7).

Les barres (2, 3) de la rangée avant (6) sont liées au châssis (1) par des bras oscillants extérieurs (9) et par des bras oscillants intérieurs (10), tandis que les barres (4, 5) de la rangée arrière (7) sont liées au châssis (1) par des bras oscillants extérieurs (11) et des bras oscillants intérieurs (12).

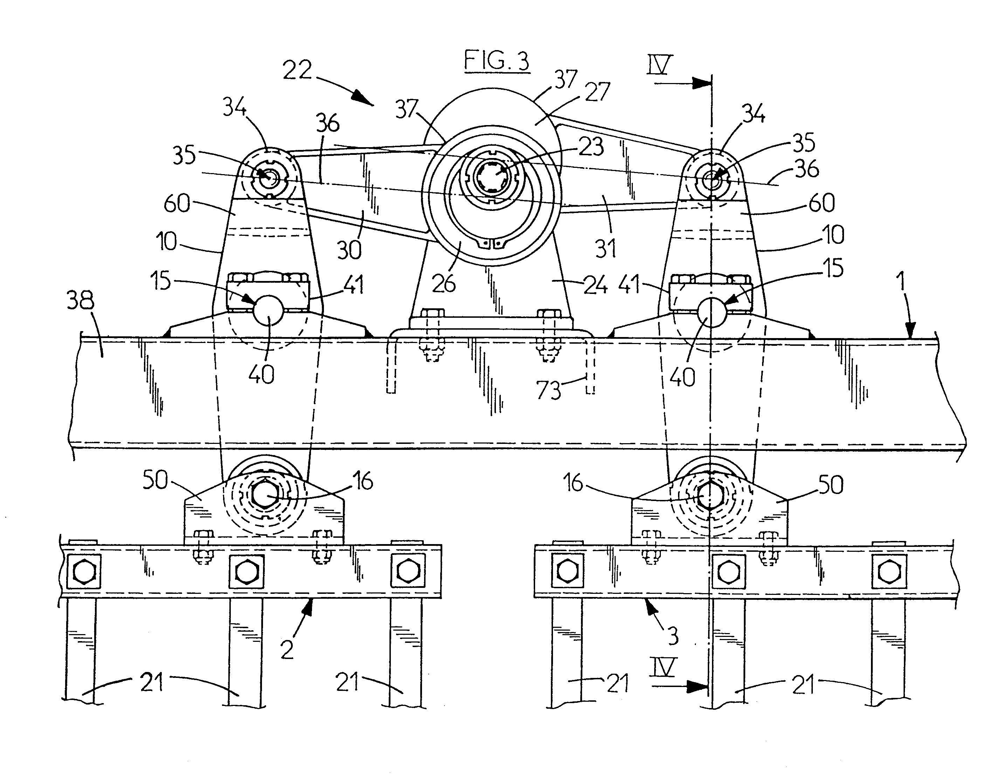

Les bras oscillants extérieurs (9) des barres (2, 3) de la rangée avant (6) sont articulés au châssis (1), respectivement à leur barre correspondante (2, 3), par des articulations (13), respectivement (14), tandis que les bras oscillants intérieurs (10) desdites barres (2, 3) sont articulés au châssis (1), respectivement à leur barre (2, 3) correspondante, par des articulations (15), respectivement (16) (voir figures 3, 4, 6 et 7).

Les bras oscillants extérieurs (11) des barres (4, 5) de la rangée arrière (7) sont articulés au châssis (1), respectivement à leur barre (4, 5) correspondante, par des articulations (17), respectivement (18), tandis que les bras oscillants intérieurs (12) desdites barres (4, 5) sont articulés au châssis (1), respectivement à leur barre (4, 5) correspondante, par des articulations (15), respectivement (19).

Les articulations (13, 14, 15, 16 ; 17, 18, 15, 19) ont chacune un axe dirigé sensiblement parallèlement à la direction d'avance (8).

Les bras oscillants extérieurs (9 ; 11) des barres (2 ; 4) ou (3 ; 5) sont disposés côte à côte dans une direction transversale à la direction d'avance (8), tandis que les bras oscillants intérieurs (10 ; 12) des barres (2 ; 4) ou (3 ; 5) sont disposés l'un derrière l'autre suivant une direction sensiblement parallèle à la direction d'avance (8).

La machine est aussi équipée d'un dispositif d'attelage (20) permettant de l'accoupler par exemple au système d'attelage trois points d'un véhicule tracteur (non représenté).

Chaque barre à outils (2, 3, 4, 5) est munie d'un certain nombre d'outils de travail du sol (21) tels que par exemple des dents.

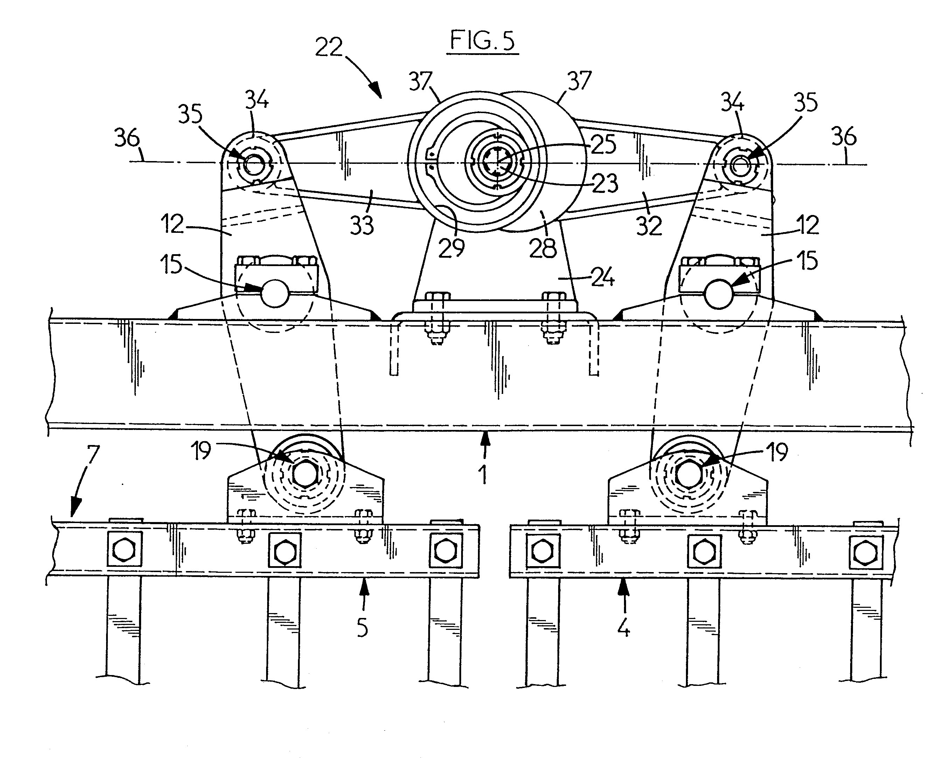

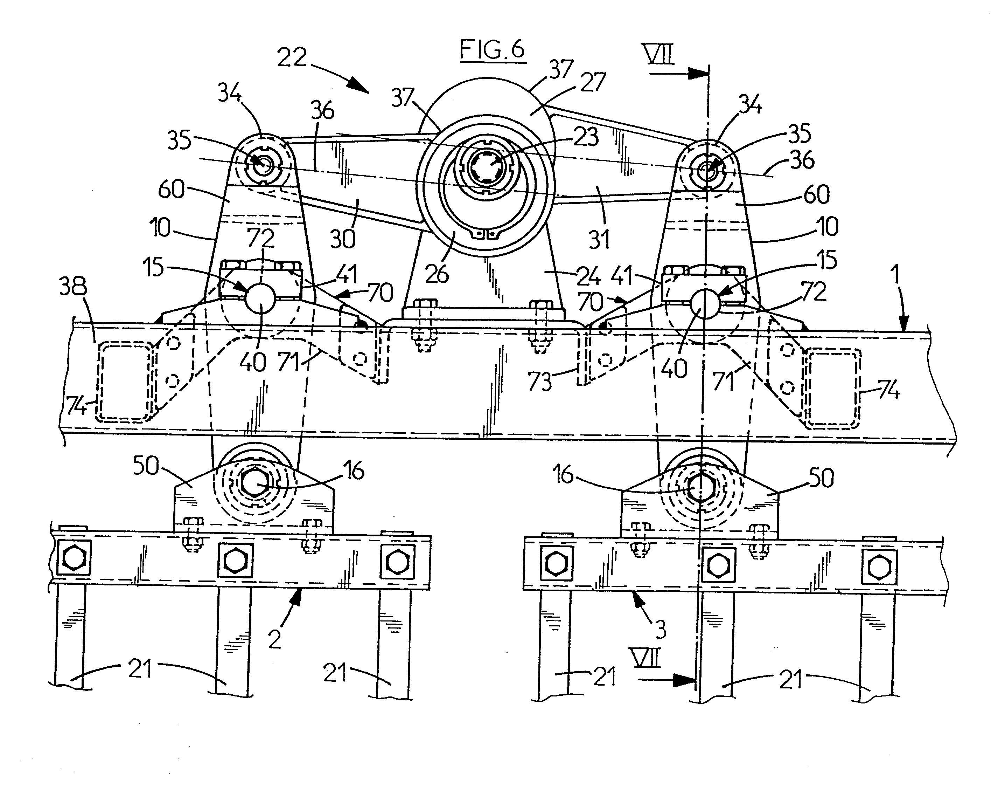

Les barres à outils (2, 3, 4, 5) sont animées d'un mouvement de va-et-vient alternatif transversalement à la direction d'avance (8) par un dispositif à bielles-excentriques (22) fixé sur la partie supérieure de la partie médiane du châssis (1). Ce dispositif à bielles-excentriques (22) est représenté en vue de dessus sur la figure 2, en vue de devant sur les figures 3 et 6 et en vue de derrière sur la figure 5.

Ce dispositif à bielles-excentriques (22) est connu de l'homme de l'art. Il comporte un arbre (23) guidé en rotation dans un palier (24) fixé sur le châssis (1). L'arbre (23) comporte un axe de rotation (25) dirigé sensiblement parallèlement à la direction d'avance (8). Cet arbre (23) est entraîné d'une manière connue de l'homme de l'art à partir de la prise de force du véhicule tracteur (non représenté) auquel est attelée la machine.

A l'avant du palier (24), l'arbre (23) supporte deux excentriques (26, 27) et à l'arrière dudit palier (24), deux excentriques (28, 29). Les excentriques (26, 27 ; 28, 29) entraînent leur barre correspondante (2, 3 ; 4, 5) au moyen de bielles (30, 31 ; 32, 33). Les excentriques (26, 27) entraînant leur barre avant correspondante (2, 3) sont en opposition de phase. De même, les excentriques (28, 29) entraînant leur barre arrière correspondante (4, 5) sont également en opposition de phase. Par ailleurs, les excentriques (28, 29) des barres arrière (4, 5) sont décalés de 90° par rapport aux excentriques (26, 27) des barres avant (2, 3).

Sur les figures 1 et 3 à 7, on voit que les bras oscillants intérieurs (10 ; 12) sont prolongés vers le haut, au-delà de leur articulation (15) au châssis (1). A la partie supérieure de cette prolongation est fixé le pied (34) de la bielle correspondante (30, 31 ; 32, 33) au moyen d'une articulation (35) d'axe dirigé sensiblement parallèlement à la direction d'avance (8). Chaque bielle (30, 31 ; 32, 33) transmet ainsi le mouvement alternatif qu'elle reçoit de son excentrique correspondant (26, 27 ; 28, 29) à sa barre correspondante (2, 3 ; 4, 5) par l'intermédiaire du bras oscillant intérieur (10 ; 12) de ladite barre correspondante (2, 3 ; 4, 5).

Sur les figures 3, 5 et 6, on a représenté les bielles (30, 31) entraînant les barres avant (2, 3) dans l'une de leurs positions médianes de leur mouvement alternatif transversal et les bielles (32, 33) entraînant les barres arrière (4, 5) dans l'une de leurs positions extrêmes de leur mouvement alternatif transversal. On comprendra cependant qu'au cours de la rotation de l'arbre (23) du dispositif à bielles-excentriques (22), les bielles (30, 31) entraînant les barres avant (2, 3) seront à un moment donné dans l'une de leurs positions extrêmes de leur mouvement alternatif transversal, tandis que les bielles (32, 33) entraînant les barres arrière (4, 5) seront à ce même moment dans l'une de leurs positions médianes de leur mouvement alternatif transversal.

Comme visible sur les figures 3, 5 et 6, les bielles (30, 31 ; 32, 33) présentent chacune un plan de symétrie (36) contenant l'axe de leur pied (34) et de leur tête (37). On voit également sur la figure 5 que dans l'invention, les bielles (30, 31 ; 32, 33) sont agencées de telle manière que lorsque les deux bielles (32, 33) ou (30, 31) entraînant leur barre (4, 5) ou (2, 3) correspondante sont au point mort de leur mouvement alternatif transversal, leurs plans de symétrie (36) sont confondus, sont horizontaux et contiennent l'axe de rotation (25) de l'arbre (23) du dispositif à bielles-excentriques (22). Cet agencement permet un équilibrage optimal des masses en mouvement.

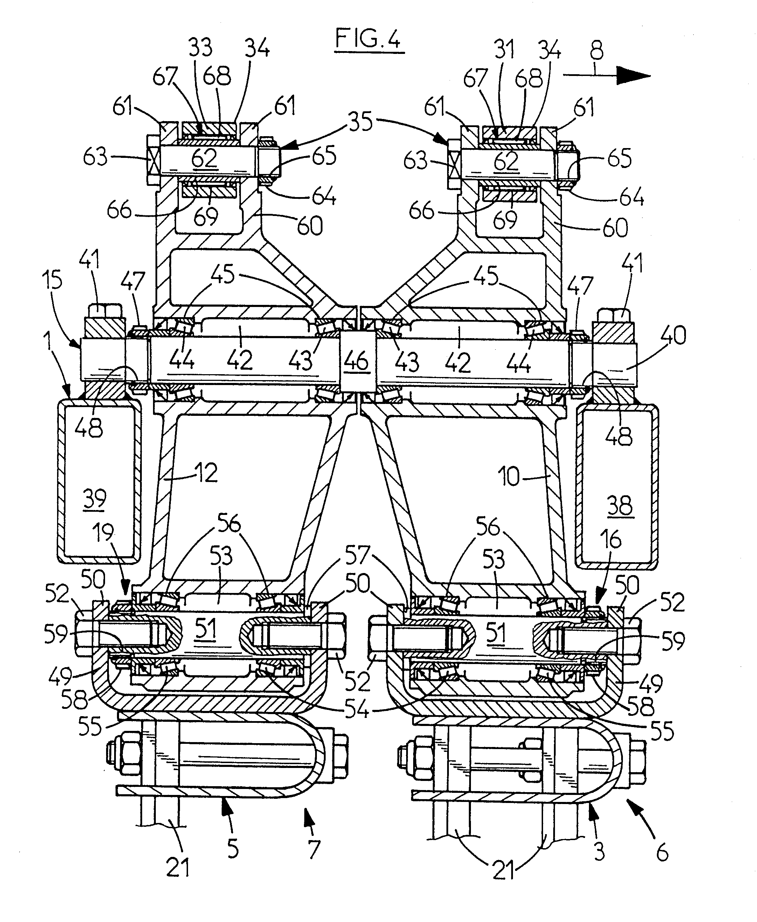

Sur la figure 4, on voit en détail le montage du bras oscillant intérieur (10) de la barre avant (3) et du bras oscillant intérieur (12) de la barre arrière (5). On comprendra cependant que le montage du bras oscillant (10) de la barre avant (2) et du bras oscillant (12) de la barre arrière (4) est réalisé de la même manière.

Comme dit plus haut, le bras oscillant intérieur (10) d'une barre avant (2) ou (3) est disposé, compte tenu du sens d'avance (8), devant le bras oscillant intérieur (12) d'une barre arrière (4) ou (5). Ces deux bras oscillants intérieurs (10 ; 12) s'étendent entre deux poutres (38, 39) que comporte le châssis (1). Leur articulation (15) au châssis (1) comporte un arbre commun (40) s'étendant au-dessus des deux poutres (38, 39) du châssis (1). La fixation de cet arbre (40) sur le châssis (1) est réalisée par deux brides (41) chacune fixée sur l'une des poutres (38, 39). L'articulation (15) de chaque bras oscillant intérieur (10 ; 12) sur le châssis (1) comporte par ailleurs un palier à roulements (42). Ce palier à roulements (42) comporte deux roulements (43, 44) s'étendant entre l'alésage (45) du bras oscillant intérieur (10 ; 12) correspondant et l'arbre commun (40). La liaison axiale de chaque bras oscillant intérieur (10 ; 12) sur l'arbre commun (40) est réalisée d'une part par un épaulement (46) aménagé dans la partie médiane de l'arbre commun (40), contre lequel bute l'un (43) des roulements (43, 44), et d'autre part par un écrou (47) vissé sur une partie filetée (48) de l'arbre commun (40) et qui appuie sur l'autre (44) des deux roulements (43, 44). Pour ce qui concerne les autres détails du montage de ces roulements (43, 44), ceux-ci sont à la portée de l'homme de l'art.

Comme visible sur la figure 4, l'articulation (19) d'un bras oscillant intérieur (12) à la barre (4) ou (5) est identique à l'articulation (16) d'un bras oscillant intérieur (10) à la barre (2) ou (3).

Chaque articulation (16 ; 19) comporte une chape (49) fixée sur la partie supérieure de la barre correspondante (2 ou 3) ou (4 ou 5). Cette chape (49) est ouverte vers le haut, et entre ses deux ailes (50) est fixé un axe (51) au moyen de deux vis (52). Chaque articulation (16 ; 19) comporte par ailleurs un palier à roulements (53). Ce palier à roulements (53) comporte deux roulements (54, 55) s'étendant entre l'alésage (56) aménagé à la partie inférieure du bras oscillant intérieur (10 ; 12) correspondant s'étendant entre les deux ailes (50) de la chape (49) et l'axe (51) correspondant. La liaison axiale de l'axe (51) dans le bras oscillant intérieur (10 ; 12) correspondant est réalisée d'une part par un épaulement (57) aménagé sur l'axe (51) et contre lequel bute l'un (54) des roulements (54, 55), et d'autre part par un écrou (58) vissé sur une partie filetée (59) de l'axe (51) et qui appuie sur l'autre (55) des deux roulements (54, 55). Pour ce qui concerne les autres détails du montage de ces roulements (54, 55), ceux-ci sont également à la portée de l'homme de l'art.

Sur la figure 4, on voit que les roulements (43, 44) des articulations (15) et les roulements (54, 55) des articulations (16 ; 19) sont avantageusement des roulements à rouleaux coniques.

Comme dit plus haut également, le pied (34) de chaque bielle (30, 31 ; 32, 33) est lié à la partie supérieure de la partie du bras oscillant intérieur (10 ; 12) prolongée vers le haut au-delà de l'articulation (15), au moyen d'une articulation (35).

A cet effet, ladite articulation (35) comporte une chape (60) aménagée à ladite partie supérieure, qui est ouverte vers le haut et entre les deux ailes (61) de laquelle s'étend le pied (34) de la bielle (30, 31 ; 32, 33) correspondante.

Ladite articulation (35) comporte par ailleurs un axe (62) fixé entre les deux ailes (61) de la chape (60). La liaison axiale de cet axe (62) par rapport à la chape (60) est réalisée par un épaulement (63) aménagé à une extrémité de 1 axe (62) et par un écrou (64) vissé sur une partie filetée (65) aménagée à 1 autre extrémité dudit axe (62). Pour éviter de déformer les deux ailes (61) de la chape (60) lors du vissage de 1 écrou (64) sur la partie filetée (65) de 1 axe (62), on a aménagé une bague entretoise (66) entre l'intérieur des deux ailes (61).

L'articulation (35) comporte enfin encore un palier à roulements (67). Ce palier à roulements (67) comprend un roulement à aiguilles (68) s'étendant entre 1 alésage (69) aménagé dans le pied (34) de la bielle correspondante (30, 31 ; 32, 33) et la bague entretoise (66) centrée sur 1 axe (62).

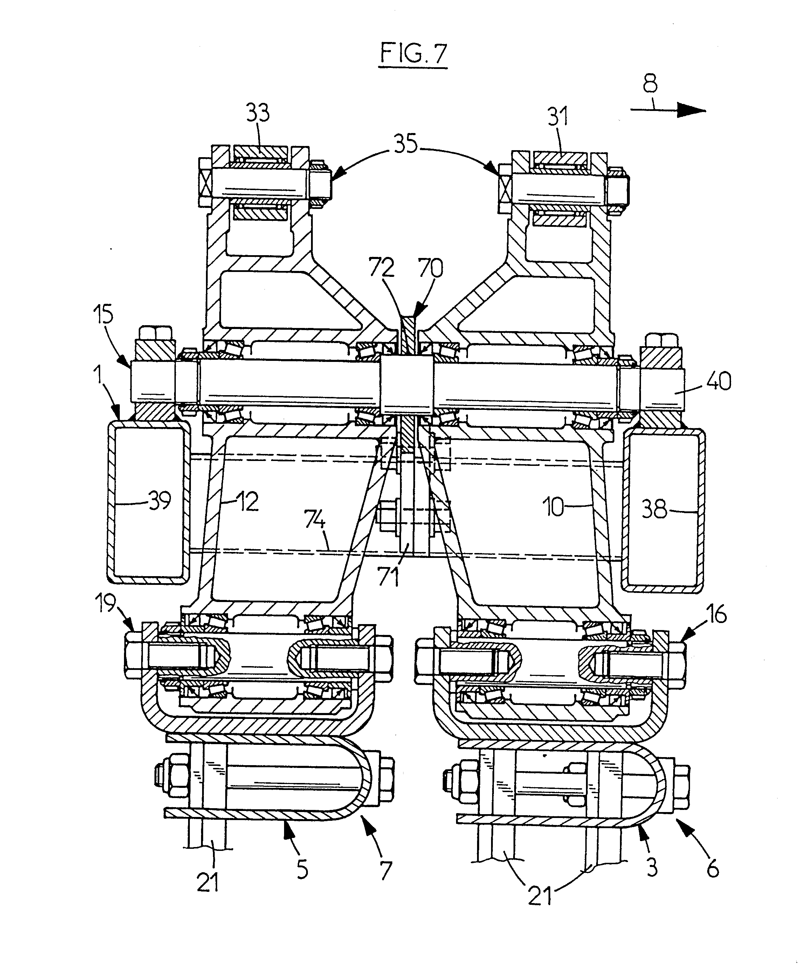

Sur les figures 6 et 7 est représenté un deuxième exemple de réalisation. Comme visible, ce deuxième exemple de réalisation comporte de nombreux organes qui sont identiques aux organes correspondants du premier exemple de réalisation. Ces organes ne seront donc plus redécrits.

Ce deuxième exemple de réalisation diffère du premier exemple de réalisation par le fait qu'entre les deux bras oscillants intérieurs (10 ; 12) montés sur l'arbre commun (40), s'étend un palier intermédiaire (70) qui soutient la partie médiane de l'arbre commun (40). Comme visible sur la figure 6, ce palier intermédiaire (70) est constitué par une arche (71) qui comporte dans sa partie médiane un alésage (72) dans lequel est centré 1 arbre commun (40). A son extrémité dirigée vers le dispositif à bielles-excentriques (22), l'arche (71) est fixée sur une traverse (73) s'étendant entre les deux poutres (38, 39) du châssis (1) et sur laquelle est fixé le palier (24) du dispositif à bielles-excentriques (22). A son autre extrémité, l'arche (71) est fixée sur une traverse (74) s'étendant également entre les deux poutres (38, 39) du châssis (1).

Cette arche (71) évite la flexion de la partie médiane de l'arbre commun (40) qui serait engendrée par l'effort d'entraînement. Ce deuxième exemple de réalisation est donc plus particulièrement destiné aux machines de grande largeur de travail.

On pourra apporter différentes modifications ou améliorations aux exemples de réalisation décrits sans qu'on ne sorte pour autant du cadre de la présente invention.

## Revendications

1. Machine agricole de travail du sol comportant un châssis (1) muni d'un dispositif d'attelage (20) à un véhicule tracteur, châssis (1) auquel est liée par une pluralité de bras oscillants (9, 10 ; 11, 12) au moins une rangée (6 ; 7) de deux barres (2, 3) ou (4, 5) munies d'outils (21) et à mouvement en opposition de phase, ledit mouvement étant généré par un mécanisme de transformation du mouvement rotatif reçu d'une source motrice en un mouvement de va-et-vient transversal à la direction d'avance (8), comportant un dispositif à bielles-excentriques (22) supporté par ledit châssis (1) et dont les bielles (30, 31 ; 32, 33) servent à transmettre le mouvement de va-et-vient aux barres (2, 3 ; 4, 5) correspondantes, lesdits bras oscillants (9, 10 ; 11, 12) étant articulés d'une part au châssis (1) par une articulation (13, 15 ; 17, 15) d'axe dirigé sensiblement parallèlement à la direction d'avance (8) et d'autre part à leur barre (2, 3 ; 4, 5) correspondante par une articulation (14, 16 ; 18, 19) d'axe également dirigé sensiblement parallèlement à la direction d'avance (8), caractérisée par le fait que chaque bielle (30, 31 ; 32, 33) est liée par une articulation (35) d'axe dirigé sensiblement parallèlement à la direction d'avance (8) à un bras oscillant (10 ; 12) de sa barre correspondante (2, 3 ; 4, 5).

2. Machine agricole de travail du sol selon la revendication 1, caractérisée par le fait que chaque bielle (30, 31 ; 32, 33) est liée au bras oscillant (10 ; 12) de sa barre correspondante (2, 3 ; 4,5) s'étendant le plus près du dispositif à bielles-excentriques (22).

3. Machine agricole de travail du sol selon l'une au moins des revendications 1 ou 2, caractérisée par le fait que le bras oscillant (10 ; 12) entraîné par une bielle (30, 31 ; 32, 33), est prolongé vers le haut au-delà de son articulation (15) au châssis (1), ladite bielle (30, 31 ; 32, 33) étant articulée au moyen de l'articulation (35) à la partie dudit bras oscillant entraîné (10 ; 12) prolongée vers le haut au-delà de ladite articulation (15).

4. Machine agricole de travail du sol selon l'une au moins des revendications 1 à 3, caractérisée par le fait que d'une manière connue en soi, chaque bielle (30, 31 ; 32, 33) présente un plan de symétrie (36) contenant l'axe de son pied (34) et de sa tête (37), que les bielles (30, 31) ou (32, 33) qui sont liées à deux barres adjacentes (2, 3) ou (4, 5) d'une même rangée (6, 7) ayant des mouvements en opposition de phase, sont agencées de telle manière que lorsque lesdites bielles (30, 31) ou (32, 33) sont au point mort de leur mouvement alternatif transversal, leurs plans de symétrie (36) sont confondus, sont horizontaux et contiennent l'axe de rotation (25) de l'arbre (23) du dispositif à bielles-excentriques (22).

5. Machine agricole de travail du sol selon l'une au moins des revendications précédentes, caractérisée par le fait qu'elle comporte deux rangées (6 ; 7) de barres (2, 3 ; 4, 5) disposées l'une derrière 1 autre, compte tenu du sens d'avance (8), et que les bras oscillants entraînés (10 ; 12) de deux barres (2 ; 4) ou (3 ; 5) s'étendant directement l'une derrière l'autre, sont, compte tenu dudit sens d'avance (8), disposés l'un derrière l'autre.

6. Machine agricole de travail du sol selon la revendication 5, caractérisée par le fait que les articulations (15) desdits bras oscillants entraînés (10 ; 12) de deux barres (2 ; 4) ou (3 ; 5) s'étendant directement l'une derrière l'autre, comportent un arbre commun (40) fixé sur le châssis (1) et sur lequel pivotent lesdits bras oscillants entraînés (10 ; 12).

7. Machine agricole de travail du sol selon la revendication 6, caractérisée par le fait qu'entre deux bras oscillants entraînés (10 ; 12) de deux barres (2 ; 4) ou (3 ; 5) s'étendant directement l'une derrière l'autre, est agencé un palier intermédiaire (70) solidaire du châssis (1) qui soutient la partie médiane dudit arbre commun (40).

8. Machine de travail du sol selon 1 une au moins des revendications précédentes, caractérisée par le fait que les articulations (15, 16 ; 15, 19) des bras oscillants (10 ; 12) entraînés comportent des paliers à roulements (42, 53).

9. Machine agricole de travail du sol selon l'une au moins des revendications précédentes, caractérisée par le fait que l'articulation (35) d'une bielle (30, 31 ; 32, 33) sur le bras oscillant entraîné (10 ; 12) correspondant comporte un palier à roulements (67).

FIG.1

FIG.2

FIG.3

0287489

FIG.4

FIG.5

0287489

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CH-A- 404 275 (STIERLI) <br> * En entier * <br> --- | 1 | A 01 B 19/06 |
| A | FR-A-1 554 614 (LE BOUETTE) <br> --- | | |
| A | DE-C- 810 673 (RÖHR) <br> --- | | |
| A | FR-A-1 389 186 (MAUGET PETIT) <br> ----- | | |

DOMAINES TECHNIQUES RECHERCHES (Int. Cl.4)

A 01 B

Le présent rapport a été établi pour toutes les revendications

| Lieu de la recherche | Date d'achèvement de la recherche | Examinateur |
|---|---|---|
| LA HAYE | 13-07-1988 | VON ARX V.U. |